Europäisches Patentamt

European Patent Office

Office européen des brevets

(11) Numéro de publication: **0 258 091 B1**

# FASCICULE DE BREVET EUROPEEN

(45) Date de publication de fascicule du brevet: **15.04.92**  (51) Int. Cl.⁵: **H02H 3/04**

(21) Numéro de dépôt: **87401715.5**

(22) Date de dépôt: **20.07.87**

(54) **Déclencheur statique numérique auto-surveille.**

(30) Priorité: **08.08.86 FR 8611613**

(43) Date de publication de la demande:
**02.03.88 Bulletin 88/09**

(45) Mention de la délivrance du brevet:
**15.04.92 Bulletin 92/16**

(84) Etats contractants désignés:
**BE CH DE ES GB IT LI SE**

(56) Documents cités:
**FR-A- 2 513 436**
**US-A- 4 476 423**

**SIEMENS POWER ENGINEERING, vol. 6, no. 1, janvier-février 1984, pages 50-51, Dassau, DE; D. SCHUY et al.: "Solid-state protective relays in casings"**

(73) Titulaire: **MERLIN GERIN**
**Rue Henri Tarze**
**F-38050 Grenoble Cédex(FR)**

(72) Inventeur: **Dano, Maurice**
**Merlin Gerin**
**F-38050 Grenoble Cedex(FR)**
Inventeur: **Corcoles, Vincent**
**Merlin Gerin**
**F-38050 Grenoble Cedex(FR)**

(74) Mandataire: **Kern, Paul**
**Merlin Gerin Sce. Brevets 20, rue Henri Tarze**
**F-38050 Grenoble Cédex(FR)**

# Description

L'invention est relative à un déclencheur statique numérique pour un disjoncteur électrique à contacts séparables comprenant:

- des capteurs de courant qui engendrent des signaux analogiques proportionnels aux courants parcourant les conducteurs protégés par le disjoncteur,
- des circuits redresseurs pour redresser lesdits signaux et délivrer un signal analogique représentatif de la valeur maximale desdits courants,
- un convertisseur analogique numérique ayant une entrée recevant ledit signal analogique et une sortie délivrant un signal numérisé échantillonné correspondant,
- un ensemble de traitement numérique à microprocesseur, auquel est appliqué le signal numérisé pour assurer une fonction de déclenchement long retard et/ou une fonction de déclenchement court retard et qui élabore un ordre de déclenchement du disjoncteur, lors d'un dépassement de seuils prédéterminés, ledit ordre étant temporisé en fonction de la valeur du signal, ledit microprocesseur effectuant périodiquement une numérisation,
- un dispositif de surveillance auquel sont appliquées des impulsions périodiques représentatives de l'activité du microprocesseur, ledit dispositif de surveillance produisant un signal de réinitialisation du microprocesseur en cas d'absence d'impulsions,
- et un moyen de déclenchement du disjoncteur actionné par ledit ordre de déclenchement.

Un tel déclencheur est par exemple connu du brevet français 2.513.436.

Le bon fonctionnement du disjoncteur et plus particulièrement de son déclencheur statique dépend de la bonne exécution du programme du microprocesseur. Une mauvaise exécution peut être la conséquence d'une perturbation conduite ou rayonnée qui affecte le bon déroulement du programme. La présente invention part de la constatation que le microprocesseur pilote toujours un déroulement périodique du traitement de l'information, notamment une numérisation périodique des courants de phase et de neutre. Ce déroulement périodique peut être capté en un endroit quelconque de la chaîne de traitement, notamment au niveau du microprocesseur qui émet des impulsions périodiques de pilotage ou au niveau de la numérisation ou de l'entrée des signaux numérisés dans le microprocesseur.

La présente invention a pour but de permettre la réalisation d'un déclencheur statique numérique à auto-surveillance du déroulement du programme.

Le déclencheur statique selon l'invention est caractérisé en ce que lesdites impulsions périodiques sont dérivées ou liées à la numérisation, et en ce que le dispositif de surveillance produit, dans un deuxième temps, un ordre de déclenchement du disjoncteur en cas d'absence poursuivie de numérisation.

Le dispositif de surveillance, communément appelé chien de garde, surveille le temps du cycle périodique et vérifie si ce temps dépasse la période prédéterminée par le microprocesseur. En cas de défaillance, le chien de garde émet un signal de réinitialisation du microprocesseur palliant un arrêt ou une interruption intempestive et fugitive de l'activité du microprocesseur. Si le déroulement périodique reprend à la suite de cette réinitialisation, le déclencheur statique reprend son fonctionnement normal, sans intervention ou signalisation particulières. Si, par contre, le cycle périodique reste interrompu, le chien de garde émet un signal d'alarme et/ou de déclenchement du disjoncteur.

Le dispositif de surveillance comporte avantageusement un condensateur chargé progressivement et déchargé périodiquement à chaque impulsion du microprocesseur. Si l'impulsion de décharge du condensateur n'arrive pas ou arrive en retard, le condensateur continue à se charger et cette surcharge peut être facilement détectée par un circuit à seuil, par exemple à amplificateur opérationnel émettant un signal lors du dépassement d'un seuil prédéterminé. En prévoyant en un premier temps l'émission d'un signal de réinitialisation du microprocesseur, on évite les déclenchements intempestifs dûs à une perturbation fugitive du programme. L'alarme ou le déclenchement n'intervient qu'en l'absence d'une reprise du déroulement périodique, généralement due à une défaillance ou une détérioration du microprocesseur ou de la chaîne de traitement surveillée.

D'autres avantages et caractéristiques ressortiront plus clairement de la description qui va suivre, d'un mode de mise en oeuvre de l'invention, donné à titre d'exemple non limitatif et représenté aux dessins annexés, dans lesquels:

- la figure 1 est un schéma synoptique du déclencheur selon l'invention équipé d'un dispositif d'auto-surveillance;
- la figure 2 illustre le schéma électrique du dispositif d'auto-surveillance selon la figure 1;
- les figures 3 à 5 montrent respectivement les variations des impulsions périodiques, de la charge du condensateur et des niveaux des sorties du dispositif de surveillance, en fonction du temps lors d'un fonctionnement normal;
- les figures 6 à 8 montrent la variation de la charge du condensateur et les niveaux des sorties du dispositif de surveillance lors d'une défaillance du déroulement périodique.

L'invention est décrite par la suite comme étant appliquée à un déclencheur statique du type décrit dans la demande de brevet français n° 8503159 du 25 février 1985, mais il est clair qu'il est utilisable pour tout autre type de déclencheur numérique utilisant un programme piloté par un microprocesseur.

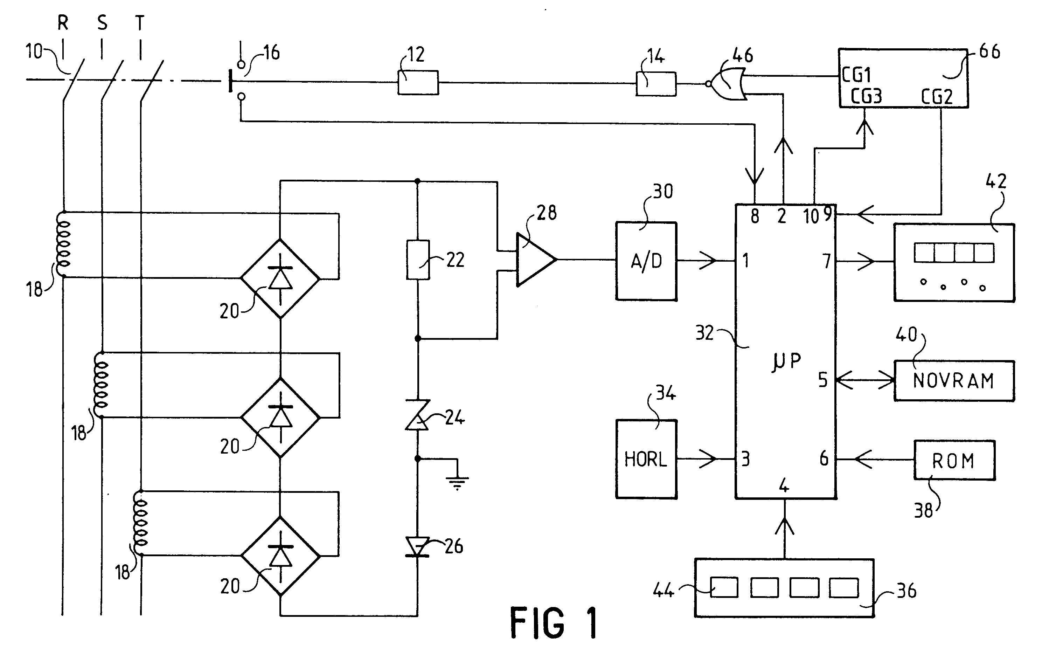

Sur la figure 1, un réseau de distribution électrique à trois conducteurs R, S, T, d'alimentation d'une charge (non représentée) comporte un disjoncteur 10 susceptible d'interrompre le circuit en position d'ouverture. Le mécanisme 12 du disjoncteur 10 est piloté par un relais 14 polarisé de commande de déclenchement du disjoncteur en cas de surcharge ou de court-circuit. Un contact auxiliaire 16, associé aux contacts principaux de disjoncteur 10 indique la position de ces contacts principaux. A chaque conducteur R, S, T, est associé un transformateur de courant 18 qui délivre un signal proportionnel au courant parcourant le conducteur associé, ce signal étant appliqué à un pont redresseur 20 à double alternance. Les sorties des trois ponts redresseurs 20 sont connectées en série dans un circuit comprenant une résistance 22, une diode Zener 24 et une diode 26 pour faire apparaître aux bornes de la résistance 22 un signal de tension proportionnel à la valeur maximale du courant parcourant les conducteurs R, S, T, et aux bornes des diodes 22, 24, une tension d'alimentation des circuits électroniques. Le signal de tension est appliqué à l'entrée d'un amplificateur 28, dont la sortie est reliée à un convertisseur analogique numérique 30. La sortie du convertisseur analogique- numérique 30 est reliée à une entrée/sortie 1 d'un microprocesseur 32. Le microprocesseur 32 comporte de plus une sortie 2 reliée au relais polarisé 14, une entrée 3 recevant les signaux d'une horloge 34, une entrée 4 reliée à un clavier 36, une entrée 6 reliée à une mémoire morte ROM 38, une entrée/sortie 5 reliée à une mémoire non volatile NOVRAM 40, une sortie 7 reliée à un dispositif d'affichage 42 et une entrée 8 reliée au contact auxiliaire 16. Le déclencheur selon la figure 1 assure la fonction de protection, notamment le déclenchement long retard respectivement lors d'une surcharge et d'un défaut apparaissant dans le circuit des conducteurs R, S, T. Le signal numérique représentatif de la valeur maximale du courant dans les conducteurs R, S, T, est appliqué à l'entrée 1 du moicroprocesseur 32 et comparé à des valeurs de seuils stockées dans une mémoire pour détecter tout dépassement de ces seuils et engendrer un ordre de déclenchement temporisé ou instantané, qui est transmis au relais polarisé 14 pour provoquer l'ouverture du disjoncteur 10. Le déclencheur peut bien entendu assurer d'autres fonctions, notamment de protection de terre ou de déclenchement instantané.

Le lecteur se reportera avantageusement à la demande de brevet pré-citée pour de plus amples informations sur le fonctionnement et la constitution de ce déclencheur.

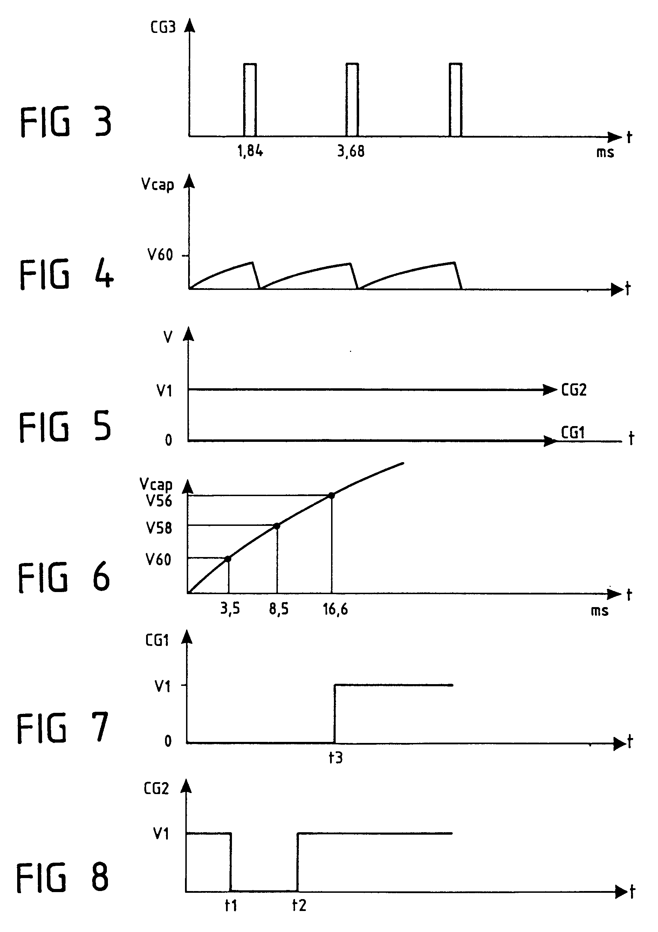

Selon la présente invention, un dispositif de surveillance ou chien de garde 66 est relié d'une part à une sortie 10 du microprocesseur 32 et d'autre part à une entrée 9 de ce microprocesseur. La sortie CG1 du chien de garde 66 est reliée à une entrée d'une porte OU 46, dont la sortie est reliée au relais polarisé 14 et dont l'autre entrée est reliée à la sortie 2 du microprocesseur 32. Le chien de garde 66 reçoit de la sortie 10 du microprocesseur des impulsions CG3, représentées sur la figure 3. La période de ces impulsions, qui déterminent le déroulement périodique du traitement de l'information, est de 1,84 millisecondes mais il est clair que toute autre période est utilisable.

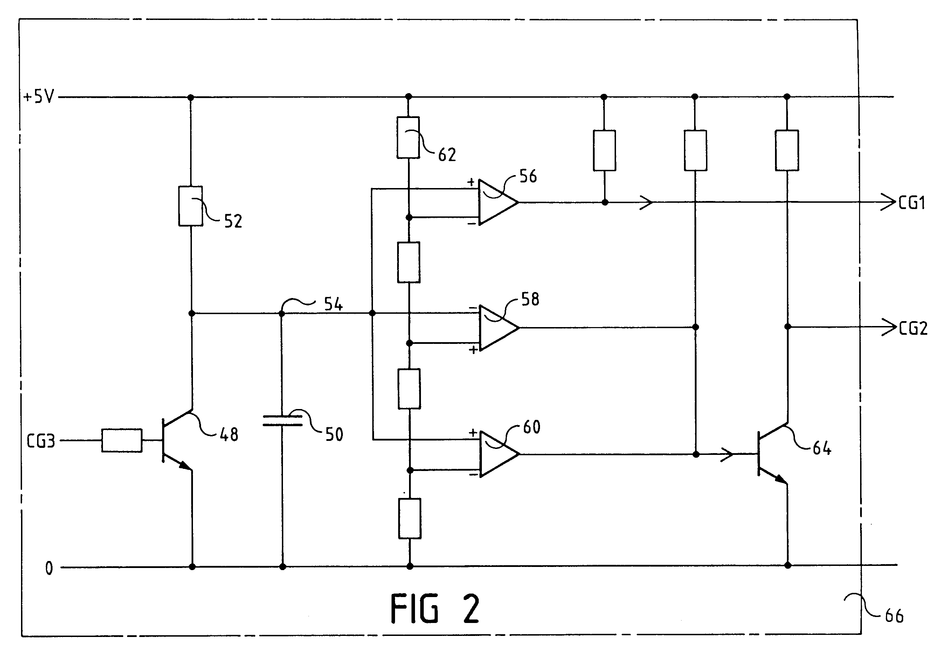

En se référant plus particulièrement à la figure 2, on voit que le chien de garde 66 comporte un transistor 48 dont la base est reliée à l'entrée CG3 recevant les impulsions périodiques du microprocesseur 32. Le collecteur et l'émetteur du transistor 48 sont connectés aux bornes d'un condensateur 50, reliées par l'intermédiaire d'une résistance 52 à l'alimentation. Le point de liaison 54 du condensateur 50 et de la résistance 52 est relié d'une part aux entrées positives de deux amplificateurs opérationnels 56, 60 et d'autre part à l'entrée négative d'un amplificateur opérationnel 58. Les entrées opposées des amplificateurs opérationnels 56, 58, 60, sont connectées à un pont diviseur de tension 62 relié à l'alimentation. La sortie de l'amplificateur opérationnel 56 est reliée à la borne CG1 du chien de garde 66 connecté à la porte OU 46. Les sorties des amplificateurs opérationnels 58, 60 sont toutes deux reliées à la base du transistor 64. Ce transistor est un simple inverseur. Le signal CG2 gé néré sur son collecteur est relié à l'entrée 9 du microprocesseur 32. Le fonctionnement du dispositif de surveillance selon l'invention est décrit ci-dessous, plus particulièrement en référence aux figures 3 à 8.

En fonctionnement normal, le microprocesseur 32 effectue une numérisation périodique toutes les 1,84 millisecondes et applique à l'entrée CG3 du chien de garde 66 une impulsion de courte durée représentée sur la figure 3. En l'absence d'une impulsion sur l'entrée CG3, le transistor 48 est bloqué et le condensateur 50 se charge progressivement, à travers la résistance 52. Dès l'apparition d'une impulsion, le transistor 48 devient conducteur et court-circuite le condensateur 50 qui se décharge brusquement. La charge et la décharge du condensateur 50 est illustrée par la courbe de la figure 4, et il est facile de voir que cette charge ne dépasse jamais une valeur crête prédéterminée. Cette valeur crête est inférieure aux seuils des amplificateurs opérationnels 56, 58, 60, et il est à noter que la sortie CG1 de l'amplificateur opérationnel 56 est maintenue à une valeur basse 0 ainsi que la sortie de l'amplificateur opérationnel 60. Le signal CG2 est alors maintenu à un niveau haut constant. Dans ces conditions de fonctionnement, le chien de garde 66 n'intervient pas.

Lors d'une absence ou d'un retard d'une impulsion appliquée à l'entrée CG3 du chien de garde 66, le condensateur 50 continue à se charger et sa tension aux bornes augmente de la manière illustrée par la figure 6. Le seuil V60 de l'amplificateur opérationnel 60 est franchi en premier, par exemple après 3,5 millisecondes. La sortie de l'amplificateur opérationnel 60 passe alors à la valeur haute et provoque la conduction du transistor 64 et le passage du signal CG2 de la valeur haute à la valeur basse (voir figure 8, temps t1). Cette variation transmise à l'entrée 9 du microprocesseur 32 n'a aucune influence et elle permet uniquement de disposer d'une variation franche au temps t2 lors du franchissement du seuil V58 de l'amplificateur opérationnel 58. Ce franchissement provoque le passage à la valeur basse de la sortie de l'amplificateur 58 et, en conséquence, le blocage du transistor 64, et une transition vers la valeur haute du signal CG2, engendrant ainsi un signal brusque de réinitialisation appliqué à l'entrée 9 du microprocesseur 32. Si cette initialisation du microprocesseur 32 provoque la relance du cycle périodique et l'apparition des impulsions périodiques de remise à zéro de la charge du condensateur 50, le cycle normal est repris de la manière décrite en relation aux figures 3 à 5. L'interruption du fonctionnement et du déroulement périodique du traitement de l'information a été fugitive. Si, par contre, l'ordre de réinitialisation du microprocesseur échoue, l'absence des impulsions périodiques se poursuit ainsi que la charge du condensateur 50. Lors du franchissement du seuil V56 de l'amplificateur opérationnel 56, au temps t3, le signal CG1 à la sortie du chien de garde 66 passe à la valeur élevée et est appliqué par l'intermédiaire de la porte OU au relais polarisé 14 qui provoque le déclenchement du disjoncteur 10.

Il est facile de voir que l'ordre de réinitialisation ou de redémarrage du cycle périodique du microprocesseur 32 évite dans de nombreux cas le déclenchement injustifié du disjoncteur 10. Cette tentative de réinitialisation du microprocesseur 32 retarde bien entendu de quelques microsecondes l'ordre de déclenchement mais cette faible temporisation n'est pas gênante.

**Revendications**

1. Déclencheur statique numérique pour un disjoncteur électrique à contacts séparables comprenant :
   - des capteurs (18) de courant qui engendrent des signaux analogiques proportionnels aux courants parcourant les conducteurs (R, S, T) protégés par le disjoncteur,
   - des circuits redresseurs (20) pour redresser lesdits signaux et délivrer un signal analogique représentatif de la valeur maximale desdits courants,
   - un convertisseur analogique numérique (30) ayant une entrée recevant ledit signal analogique et une sortie délivrant un signal numérisé échantillonné correspondant,
   - un ensemble de traitement numérique à microprocesseur (32), auquel est appliqué le signal numérisé pour assurer une fonction de déclenchement long retard (LR) et/ou une fonction de déclenchement court retard (CR) et qui élabore un ordre de déclenchement du disjoncteur, lors d'un dépassement de seuils prédéterminés, ledit ordre étant temporisé en fonction de la valeur du signal, ledit microprocesseur effectuant périodiquement une numérisation,
   - un dispositif (66) de surveillance auquel sont appliquées des impulsions périodiques représentatives de l'activité du microprocesseur (32), ledit dispositif de surveillance produisant un signal de réinitialisation du microprocesseur en cas d'absence d'impulsions,
   - et un moyen de déclenchement (12, 14) du disjoncteur actionné par ledit ordre de déclenchement, déclencheur caractérisé en ce que lesdites impulsions périodiques sont dérivées ou liées à la numérisation, et en ce que le dispositif de surveillance produit, dans un deuxième temps, un ordre de déclenchement du disjoncteur en cas d'absence poursuivie de numérisation.

2. Déclencheur selon la revendication 1, caractérisé en ce que lesdites impulsions périodiques provoquent périodiquement la décharge d'un condensateur et qu'une interruption desdites impulsions autorise la charge du condensateur (50) qui provoque l'émission d'un signal de réinitialisation lors du dépassement d'un premier seuil (V58) de charge, et d'un ordre de déclenchement lors du dépassement d'un deuxième seuil (V56) supérieur au premier.

**3.** Déclencheur selon la revendication 2, caractérisé en ce qu'il comporte un circuit de décharge connecté aux bornes du condensateur (50) et comprenant un semiconducteur (48) piloté par lesdites impulsions pour décharger périodiquement à chaque impulsion le condensateur (50).

**4.** Déclencheur selon l'une des revendications 2 et 3, caractérisé en ce que la tension de charge du condensateur (50) est appliquée à des amplificateurs opérationnels (56, 58, 60) à seuils (V56, V58, V60) pour délivrer ledit signal de réinitialisation et ledit ordre de déclenchement lors des franchissements respectifs desdits seuils.

## Claims

**1.** A digital solid-state trip release for an electrical circuit breaker with separable contacts comprising:
- current sensors (18) which generate analog signals proportional to the currents flowing in conductors (R, S, T) protected by the circuit breaker,
- rectifier circuits (20) to rectify said signals and deliver an analog signal representative of the maximum value of said currents,
- an analog-to-digital converter (30) having an input receiving said analog signal and an output delivering a corresponding sampled digitized signal,
- a microprocessor-based digital processing unit (32), to which the digitized signal is applied to perform a long delay tripping function (LR) and/or a short delay tripping function (CR) and which generates a circuit breaker tripping order when preset thresholds are exceeded, said order being delayed according to the value of the signal, said microprocessor periodically performing a digitization,
- a monitoring device (66) to which is applied the periodic pulses representative of the activity of the microprocessor (32), said monitoring device producing a microprocessor reinitialization signal in the absence of said pulses,
- and circuit breaker tripping means (12, 14) actionnable by said tripping order, said trip release characterized in that said periodic pulses are derived or related to the digitization, and in that the monitoring device produces, in a second instance, a circuit breaker tripping order in the continued absence of digitization.

**2.** The trip release according to claim 1, characterized in that said periodic pulses periodically cause a capacitor to be discharged and an interruption of said pulses allows the capacitor (50) to be charged causing a reinitialization signal to be emitted when a first charging threshold is exceeded (V58) and a tripping order to be emitted when a second threshold (V56) higher than the first one is exceeded.

**3.** The trip release according to claim 2, characterized in that it comprises a discharge circuit connected to the terminals of the capacitor (50) and comprising a semi-conductor (48) controlled by said pulses to periodically discharge the capacitor (50) at each pulse.

**4.** The trip release according to one of the claims 2 and 3, characterized in that the charging voltage of the capacitor (50) is applied to operational amplifiers (56, 58, 60) with thresholds (V56, V58, V60) to deliver said reinitialization signal and said tripping order when said thresholds are respectively exceeded.

## Patentansprüche

**1.** Statischer digitaler Auslöser fUr einen elektrischen Leistungsschalter mit trennbaren Kontakten, mit:
- Stromfühlern (18), die analogische Signale erzeugen, die proportional zu den Strömen sind, die durch die von dem Leistungsschalter geschützten Leiter (R, S, T) fliessen,
- Gleichrichterkreisen (20), um die genannten Signale gleichzurichten und ein analogisches Signal abzugeben, das den maximalen Wert der genannten Ströme darstellt,
- einem analogischen digitalen Umwandler (30) mit einem das genannte analogische Signal aufnehmenden Eingang und mit einem Ausgang, der ein entsprechendes digitalisiertes Signal abgibt,
- einer digitalen Auswertungseinheit mit Mikroprozessor (32), an die das digitale Signal angelegt wird, um eine Langzeitverzögerungsfunktion (LR) und/oder eine Kurzzeitverzögerungsfunktion (CR) zu gewährleisten, und die einen Auslösebefehl des Leistungsschalters erstellt, bei Ueberschreiten von vorbestimmten Schwellwerten, wobei der genannte Befehl gemäss dem Wert des Signals verzögert wird, und wobei der Mikroprozessor periodisch eine Digitalisierung ausführt,
- einer Ueberwachungsvorrichtung (66) an der periodische Impulse angelegt werden, die die Aktivität des Mikroprozessors (32) darstellen, wobei die genannte Ueberwachungsvorrichtung ein Reaktivierungssignal des Mikroprozessors bei Abwesenheit von Impulsen erzeugt,
- und ein Auslösemittel (12, 14) des Leistungsschalters, der durch den genannten Auslösebefehl betätigt wird, Auslöser, dadurch gekennzeichnet, dass die genannten periodischen Impulse von der Digitalisierung abgeleitet oder mit ihr verbunden sind, und dass die Ueberwachungsvorrichtung in einer zweiten Phase einen Auslösebefehl des Leistungsschalters bei andauernder Abwesenheit der Digitalisierung erzeugt.

2. Auslöser gemäss Anspruch 1, dadurch gekennzeichnet, dass die genannten periodischen Impulse in regelmässigen Abständen die Entladung eines Kondensators bewirken, und dass eine Unterbrechung der genannten Impulse die Aufladung des Kondensators (50) ermöglicht, der die Abgabe eines Reaktivierungssignals hervorruft, wenn ein erster Aufladewert (V58) überschrittenwird, und einen Auslösebefehl erzeugt, wenn ein zweiter Wert (V56), höher als der erste, überschritten wird.

3. Auslöser gemäss Anspruch 2, dadurch gekennzeichnet, dass er einen Entladekreis aufweist, der mit den Klemmen des Kondensators (50) verbunden ist und einen Halbleiter (48) aufweist, der von den genannten Impulsen gesteuert wird, um periodisch bei jedem Impuls den Kondenator (50) zu entladen.

4. Auslöser gemäss einem der Ansprüche 2 und 3, dadurch gekennzeichnet, dass die Ladespannung des Kondensators (50) an operationelle Verstärker (56, 58, 60) mit Schwellwerten (V56, V58, V60) angelegt wird, um das genannte Reaktivierungssignal und den genannten Auslösebefehl abzugeben bei dem jeweiligen Ueberschreiten der genannten Werte.

FIG 1

7

FIG 2

EP 0 258 091 B1

EP 0 258 091 B1

FIG 3

CG3

1,84    3,68    ms    t

FIG 4

Vcap

V60

t

FIG 5

V

V1 ────────────────► CG2

0 ────────────────► CG1    t

FIG 6

Vcap
V56
V58
V60

3,5   8,5   16,6   ms   t

FIG 7

CG1

V1

0

t3    t

FIG 8

CG2

V1

t1    t2    t

9